# EUROPÄISCHE PATENTSCHRIFT

(11) **EP 2 255 982 B1**
(45) Veröffentlichungstag und Bekanntmachung des Hinweises auf die Patenterteilung: **14.11.2012**
(21) Anmeldenummer: 10163445.9
(22) Anmeldetag: 20.05.2010
(51) Int. Cl.: B60H 1/00

(54) **Kraftfahrzeugklimaanlage**
Motor vehicle air conditioning
Climatisation de véhicule automobile

(30) Priorität: 26.05.2009 DE 102009022739
(43) Veröffentlichungstag der Anmeldung: 01.12.2010
(73) Patentinhaber: Behr GmbH & Co. KG, 70469 Stuttgart (DE)
(72) Erfinder: Komowski, Michael, 71263 Weil der Stadt (DE)
(74) Vertreter: Grauel, Andreas

(56) Entgegenhaltungen:
- DE-A1- 3 542 626
- DE-A1-102008 021 015
- US-A1- 2003 205 370

## Beschreibung

Die, Erfindung betrifft eine Kraftfahrzeugklimaanlage gemäß dem Oberbegriff des Anspruches 1 wie sie durch die DE 10 2008 021015 A1 gezeigt wird.

Kraftfahrzeugkilmaanlagen dienen dazu, die dem Innenraum eines Kraftfahrzeuges zuzuführende Luft zu erwärmen und/oder zu kühlen. Eine Kraftfahrzeugklimaanlage umfasst einen Kältemittelverdampfer, einen Kondensator und einen Verdichter. Der Kältemittelverdampfer, der Kondensator und der Verdichter sind mittels Leitungen zu einem Kältemittelkreislauf verbunden. Der Kältemittelverdampfer ist in einem Gehäuse der Kraftfahrzeugklimaanlage angeordnet und dient dazu, die dem Innenraum des Kraftfahrzeuges zuzuführende Luft zu kühlen.

Dabei kann es bei Kraftfahrzeugklimaanlagen erforderlich sein, dass bei einem Kühlen der Luft am Kältemittelverdampfer bzw. am Verdampfer von der Kraftfahrzeugklimaanlage Luft mit zwei unterschiedlichen Temperaturniveaus zur Verfügung gestellt wird. Der Temperaturunterschied zwischen den beiden Temperaturniveaus beträgt im Allgemeinen nur weniger als z. B, 2° bis 3°. Die etwas kühlere Luft wird dabei in den Innenraum des Kraftfahrzeuges im Bereich der Mittelkonsole oder im Bereich der Armaturentafel eingeleitet und die etwas wärme Luft beispielsweise im Bereich des Fußraumes oder an den Entfrosterdüsen im Bereich der Windschutzscheibe. Derartige Kraftfahrzeugklimaanlagen weisen im Allgemeinen einen gesonderten Kaltluftbypasskanal auf, mit dessen Hilfe Luft nach dem durch den Verdampfer an eher Heizeinrichtung vorbeigeleitet werden kann. Damit ist es möglich, dass von der Kiaftfahrzeugklimaanlage bei einem Kühlen von Luft am Verdampfer Luft mit zwei unterschiednchen Temperaturniveaus zur Verfügung gestellt wird.

Die DE 197 39 578 C2 zeigt eine Kraftfahrzeugklimaanlage mit einem Heizkörper zur Erzeugung von Warmluft, mit wenigstens einem an dem Heizkörper vorbei geführten Kaltluftkanal, mit in Strörnungsriehtung anschließend an den Heizkörpern vorgesehenen die durch wenigstens eine Trennwand voneinander getrennt sind. In den Luftmischräumen ist jeweils Kalt- und Warmluft durch Luftstromsteueremente auf eine bestimmte Temperatur mischbar und von dort einer zugeordneten Klimatisierungszone durch wenigstens einen Luftkanal und wenigstens eine Luftaustriitsdüse zuführbar, um den einzelnen Klimatisierungszonen separat temperierbare Luft zuführen zu können.

Die DE 199 54 972 C1 zeigt eine Kraftfahrzeugklimaanlage mit einem Kalt-luftbypass. Der Kaltluftbypass leitet Luft nach dem Durchströmen eines Verdampfers einem Luftauslass für eine Mittelebene zu. In dem Kaltluftbypass ist eine Absperrklappe angeordnet. Mittels eines Jalousieverschlusses kann die durch einen Wärmetauscher leitbare Luftmenge gesteuert werden. Ein Kaltluftkanal mündet in einen Luftmischraum, wobei der Kaltluftkanal von einer Schwenkklappe verschließbar ist Ferner strömt die durch den Wärmetauscher geleitete Luft ebenfalls in den Luftmischraum. Aus dem Luftmischraum strömt die Luft durch einen Luftaustrittsstutzen in den Fußbereich.

Die Aufgabe der vorliegenden Erfindung besteht deshalb darin, eine Kraftfahrzeugklimaanlage zur Verfügung zu stellen, bei der ein Kaltluftbypasskanal eine hinsichtlich der Leitung der Luft optimierte geometrische Anordnung aufweist Die Kraftfahrzeugklimaanlage soll in der Herstellung preiswert sein und zuvelässig im Betrieb arbeiten.

Diese Aufgabe wird gelöst mit einer Kraftfahrzeugklimaanlage, gemäß Anspruch 1.

Die Kraftfahrzeugklimaanlage umfasst wenigstens einen Luftkanal zum Durchleiten von Luft.

Der Kaltluftbypasskanal ist unmittelbar an der Austrittsseite des Verdampfers angeschlossen und die Querschnittsfläche des Kaltluftbypasskanales unmittelbar an der Austrittsseite ist kleiner als die Austrittsfläche des Verdampfers.

In einer weiteren Ausgestaltung beträgt die Teilfläche des Verdampfers oder die Querschnittsfläche des Kaltluftbypasskanales unmittelbar an der Austrittsseite weniger als 90 %, 70 % oder 50 %, vorzugsweise weniger als 30 %, 20 % 10 % oder 5 %, der Siustrittsfläche des Verdampfers

In einer ergänzenden Ausführungsform ist in einem horizontalen und/oder vertikalen Schnitt am Verdampfer und am Kaltluftbypasskanal unmittelbar an dem Verdampfer nur bei einem Teilbereich des Schnittes der Kaltluftbypasskanal geschnitten.

Vorzugsweise beträgt der Teilbereich weniger als 90 %, 70 % oder 50 %, vorzugsweise weniger als 30 %, 20 %, 10 % oder 5 %, des gesamten Schnittes.

Nachfolgend wird "Kalt" mit "K", "Heiss" mit "H", "Warm" mit "W" und "Misch" mit "M" abgekürzt.

In einer Variante mündet der Kaltluftbypasskanal zu einem K-Luftauslass.

Zweckmäßig strömt die durch die wenigstens eine Heizeinrichtung geleitete Luft in einen H-Luftmischraum und der H-Luftmischraum weist einen H-Luftauslass auf. Die aus dem H-Luftausiass ausströmende Luft weist im Allgemeinen ein höheres Temperaturniveau auf, als die aus dem K-Luftauslass strömende Luft. Die aus dem H-Luftauslass ausgeleitete Luft wird deshalb im Allgemeinen beispielsweise dem Fußbereich oder Entfrostungsdüsen zugeführt. Die aus dem K-Luftauslass ausgeleitete Luft wird im Allgemeinen im Bereich der Mittelkonsole oder der Armaturentafel dem Innenraum des Kraftfahrzeuges zugeführt.

In einer weiteren Ausführungsform ist durch einen Heizeinrichtungsbypasskanal oder eine Heizeinrichtungsbypassöffnung Luft nach dem Durchleiten durch den Verdampfer an der wenigstens einen Heizeinrichtung vorbei in den H-Luftmisehraum einleitbar. Damit kann Luft nach dem Durchleiten durch den Verdampfer und dem damit verbundenen Abkühlen der Luft am Verdampfer unmittelbar in den H-Luftmischraum zugeführt werden. Damit kann die Temperatur der Luft in dem H-Luftmischraum bzw. die Temperatur der aus dem H-Luftauslass ausgeweiteten Luft gesteuert werden. Je mehr Luft durch den Heizeinrichtungsbypasskanal in den H-Luftmischraum eingeleitet wird, desto niedriger ist die Temperatur der aus dem H-Luftauslass ausströmenden und umgekehrt. Ferner kann mittels des H-Luftsteuerorganes, die durch die wenigstens eine Heizeinrichtung geleitete Luftmenge gesteuert werden. Je größer die durch die wenigstens eine Heiz∼ einrichtung geleitete Luftmenge ist, desto höher ist die Temperatur der aus dem H-Luftauslass ausströmenden Luft und umgekehrt.

In einer weiteren Ausgestaltung handelt es sich um eine luftseitig steuerbare Kraftfahrzeugkliniaanlage, wobei der Verdampfer und die wenigstens eine Heizeinrichtung im Wesentlichen mit einer konstanten Kühl- oder Wärmeleistung betrieben werden und die Temperatur der aus dem H-Luftauslass oder einem K-Luftauslass ausströmender Luft, insbesondere ausschließlich, mittels der der Luftsteuerorgane gesteuert wird.

Insbesondere weist die Kraftfahrzeugklimaanlage ein W-Luftsteuerorgan zum Steuern der durch den Heizeinrichtungsbypasskanal oder die Heizeinrichtungsbypassöffnung leitbaren Luftmenge auf.

In einer weiteren Ausgestaltung ist durch einen Mischraumkanal oder eine Mischraumöffnung Luft aus dem H-Luftmischraum in den Kaltluftbypasskanal oder in eine Kaltluftmischkammer einleitbar.

In einer ergänzenden Variante weist die Kraftfahrzeugklimaanjage ein M-Luftsteuerorgan zum Steuern der durch den Mischraumkanal oder die Mischraumöffnung leitbaren Luftmenge auf. Mit dem M-Luftsteuerorgan kann damit in vorteilhafter Weise die Temperatur der aus dem K-LuftausJass ausströmenden Luft gesteuert werden. Je höher die Luftmenge ist, die aus dem H-Luftmischraum in den Kaltluftbypasskanal und in die Kaltluftmischkammer einleitbar ist, desto höher ist die Temperatur der aus dem K-Luftauslass ausströmenden Luft und umgekehrt.

In einer weiteren Variante münden der Mischraumkanal oder die Mischraumöffnung sowie der Kaltluftbypasskanal in eine Kaltluftmisohkarmmer und die Kaltluftmischkammer weist den K-Luftauslass auf. Die Kaltluftmischkammer ermöglicht ein Vermischen der Luft, welche in die Kaltluftmischkammer aus dem Kaltluftbypasskanal und aus der Mischraumöffnung eintritt. Dadurch tritt in vorteilhafter Weise an dem K-Luftauslass im Wesentlichen keine Strähnigkeit der Luft auf. Die aus dem K-Luftauslass ausströmende Luft wird im Allgemeinen Luftdüsen im Bereich der Mittelkonsole des Kraftfahrzeuges zugeführt, so dass an diesen Luftdüsen im Bereich der Mittelkonsole eine homogene Temperaturverteilung der austretenden Luft auftritt. Die Kaltluftmischkammer weist dabei beispielsweise eine Höhe zwischen 2 cm und 8 cm und eine Tiefe, d. h. eine Ausdehnung in Strömungsnchtung der Luft, beispielsweise im Bereich zwischen 2 cm und 12 cm auf.

In einer weiteren Ausgestaltung nimmt die Querschmüsfläche des Kaltluftbypasskanal von einem Beginn an dem Verdampfer zu dem K-Luftauslass oder zu der Kaltluftmischkammer zu, vorzugsweise um das wenigstens 0,3-, 0,5-, 1-, 1,5-, 2- oder 3-fache zunimmt. Der Kaltluftbypasskanal weist zu Beginn am Verdampfer eine geringe Querschnittsfläche auf, welcher nur an einer Teilfläche der Austrittsseite des Verdampfers Luft aufnimmt. Im weiteren Verlauf der Strömung der Luft in dem Kaltluftbypasskanal ist eine größere Querschnittsfläche bzw. ein größerer Strömungsquerschnitt erforderlich, insbesondere für die Kaltluftmischkammer sowie für eine ausreichend große Öffnung des K-Luftauslasses, so dass hier eine Verbreiterung des Querschnittes erforderlich ist. Diese Verbreiterung des Querschnittes hat außerdem die vorteilhafte Wirkung, dass die Strömungsgeschwindigkeit der Luft in dem Kaltlftbypasskanal absinkt, so dass aufgrund der geringen Strömungsgeschwindigkeit in der Kaltluftmischkammer eine besonders gute und effektive Vermischung der Luft möglich ist zu einer homogenen Temperaturverteilung.

Insbesondere entspricht die Querschnittsfläche des Kaltluftbypasskanales an der Kaltluftmischkammer oder an dem K-Luftauslass im Wesentlichen, insbesondere mit einer Abweichung von weniger als 30 % oder 10 %, der Querschnittsfläche der Kaltluftmischkammer oder des K-Luftauslasses.

In einer weiteren Ausgestaltung ist das H-Luftsteuerorgan und/oder das K-Luftsteuerorgan und/oder das W-Luftsteuerorgan und/oder das M-Luftsteuerorgan eine Luftklappe und/oder ein Lalousieverschluss und/oder ein Rollband.

Zweckmäßig umfasst die Kraftfahrzeugklimaanlage einen Kondensator, einen Verdichter und Leitungen für einen Kältemittelkreislauf.

In einer zusätzlichen Ausgestaltung umfasst die Kraftfahrzeugklimaanlage ein Gebläse und/oder eine Steuerungseinheit und/odereinen Filter.

Im Nachfolgenden werden Ausführungsbeispiele der Erfindung unter Bezugnahme auf die beigefügten Zeichnungen näher beschrieben. Es zeigt;
- Fig. 1: einen stark vereinfachte perspektivische Ansicht einer Kraftfahrzeugklimaanlage,
- Fig. 2: einen horizontalen Längsschnitt A-A der Kraftfahrzeugklimaanlage gemäß Fig.1 und
- Fig. 3: einen vertikalen Längsschnitt B-B der Kraftfahrzeugklimaanlage ge- mäß Fig.1.

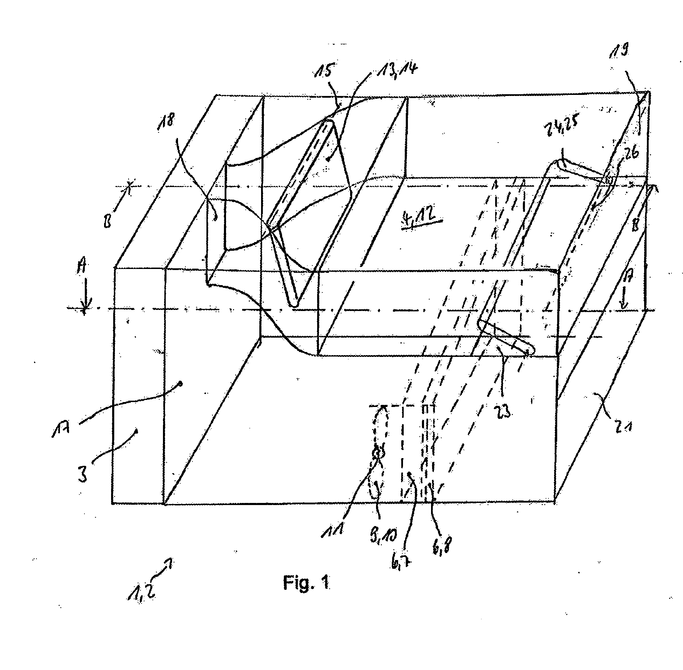

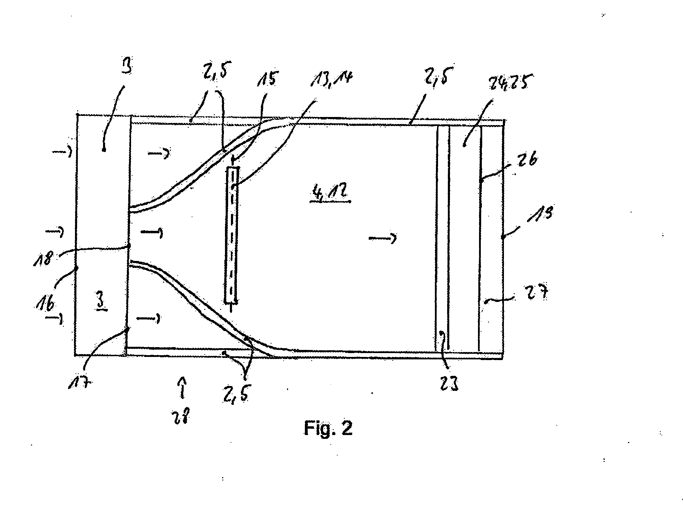

In den Fig. 1 bis 3 ist eine Kraftfahrzeugklimaanlage 1 mit einem Gehäuse 2 aus Kunststoff und einem in dem Gehäuse 2 angeordneten Verdampfer 3 dargestellt. Die Kraftfahrzeugklimaanlage 1 weist ferner einen Kondensator, einen Verdichter und Leitungen für einen Kältemittelkreislauf auf, die in den Fig. 1 bis 3 nicht dargestellt sind. Die Kraftfahrzeugklimaanlage 1 ist eine sogenannte luftseitig gesteuerte Kraftfahrzeugklimaanlage 1, d. h. die Temperatur der von der Kraftfahrzeugklimaanlage 1 zur Verfügung gestellten Luft wird durch die Stellung von Luftsteuerorganen 9, 13, 24 gesteuert und/oder geregelt.

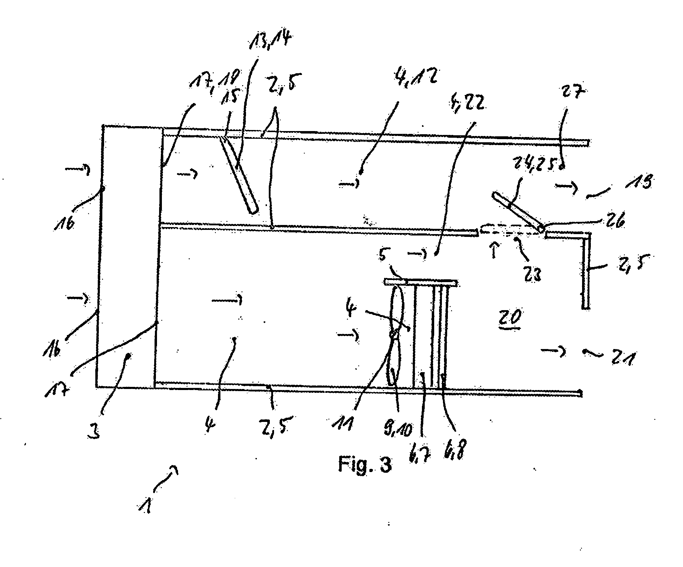

Der Verdampfer 3 weist eine Eintrittseite 16 zum Einleiten von Luft und eine Austrittsseite 17 zum Ausleiten der Luft nach dem Durchreiten durch den Verdampfer 3 auf. An einer Teilfläche 18 an der Austrittsseite 17 des Verdampfers 3 ist unmittelbar ein Kaltluftbypasskanal 12 angeschlossen. Der Kaltluftbypasskanal als Luftkanal 4 wird von Wandungen 5 des Gehäuses 2 der Kraftfahrzeugklimaanlage 1 gebildet. In Strömungsrichtung der Luft in dem Kaltluftbypasskanal 12 weitet sich der Kaltluftbypasskanal 12 in horizontaler Richtung in einem Aufweitungsabschnitt 28 auf. Nach dem Aufweitungsabschnitt 28 bleibt die horizontale Ausdehnung bzw, die Querschnittsfläche des Kaltluftbypasskanales 12 konstant. Innerhalb des Kaltluftbypasskanales 12 ist eine K-Luftklappe 14 als K-Luftsteuerorgan 13 angeordnet. Die K-Luftklappe 14 ist um eine K-Schwenkachse 15 verschwenkbar und befindet sich in der Darstellung in Fig. 1 und 3 in einer teilweise geöffneten Stellung. Mittels der K-Luftklappe 14 kann die durch den Kaltluftbypasskanal 12 strömende Luftmenge gesteuert und/oder geregelt werden.

Unterhalb einer unteren horizontalen Wandung 5, welche den Kaltluftbypasskanal 12 bildet, ist außerhalb des Aufweitungsabschnittes 28 ein Wärmeübertrager 7 als Heizeinrichtung 6 angeordnet. Der Wärmeübertrager 7 wird von Kühlmittel eines Verbrennungsmotors (nicht dargestellt) des Kraftfahrzeuges durchströmt und dient zum Erwärmen der durch den Wärmeübertrager 7 geleiteten Luft. Ferner ist in Stromungsnchtung nach dem Wärmeübertrager 7 eine elektrische Heizeinrichtung 8 ebenfalls als Heizeinrichtung 6 vorhanden. Die elektrische Heizeinrichtung 8, insbesondere eine PTC-Heizeinrichtung, dient ebenfalls zum Erwärmen der durch die elektrische Heizeinrichtung 8 strömenden Luft. Der Wärmeübertrager 7 und die elektrische Heizeinrichtung 8 sind innerhalb eines Luftkanales 4 angeordnet. Dieser Luftkanal 4 wird von zwei Wandungen 5 eingeschlossen, wobei die obere Wandung (Fig. 3) in einem Abstand von der unteren Wandung des Kaltluftbypasskanales 12 außerhalb des Aufweitungsabschittes 28 angeordnet ist. Dadurch ist zwischen der oberen Wandung 5 des Luftkanales 4 mit den Heizeinnchtungen 6 und der unteren Wandung des Kaltluftbypasskanales 12 ein Heizeinrichtungsbypasskanal 22 vorhanden. Innerhalb des Luftkanales 4 mit den beiden Heizeinrichtungen 6 ist ferner eine H-Luftklappe 10 als H-Steuerorgan 9 angeordnet. Die H-Luftklappe 10 ist um eine H-Schwenkachse 11 verschwenkbar und dient zum Steuern und/oder Regeln der durch diesen Luftkanal 4 leitbaren Luftmenge. In dem Heizeinrichungsbypasskanal 22 ist kein Luftsteuerorgan angeordnet. In einem weiteren, nicht dargestellten Ausführungsbeispiel kann jedoch auch in dem Heizeinrichtungsbypasskanal 22 ein W-Luftsteuerorgan angeordnet sein. In Fig. 1 sind die Heizeinrichtungen 6 und die H-Luftklappe 10 nur teilweise und dargestellt.

Die gesamte aus dem Verdampfer 3 an der Austrittseite 17 ausströmende Luft, die nicht an der Teilfläche 18 in den Kaltluftbypasskanal 12 einsströmt, strömt aufgrund der Geometrie der Wandungen 5 des Gehäuses 2 durch den Heizeinrichtungsbypasskanal 22 und/oder durch den Luftkanal 4 mit den Heizeinrichtungen 6. Die durch den Heizeinrichtungsbypasskanal 22 und den Luftkanal 4 mit der Heizeinrichtung 6 strömende Luft strömt dabei in einen H-Luftmischraum 20 ein. Der H-Luftmischraum 20 weist einen H-Luftauslass 21 auf, der beispielsweise die Luft dem Fahrzeugmnenraum im Bereich des Fußraumes oder an Entfrosterdüsen der Windschutzscheibe zuführt.

Aus dem H-Luftmischraum 20 kann durch eine Mischraumöffnung 23 Luft einer Kaltluftmischkammer 27 zugeführt werden. Die Kaltluftmischkammer 27 schließt sich unmittelbar an den Kaltluftbypasskanal 12 an und weist die gleiche Querschnittsfläche wie der Kaltluftbypasskanal 12 außerhalb des Aufweitungsabschnittes 28 auf. Aus der Kaltluftmischkammer 27 strömt die Luft aus einem K-Luftauslass 19 aus der Kraftfahrzeugklimaanlage 1 aus und wird beispielsweise Luftdüsen im Bereich der Mittelkonsole des Kraftfahrzeuges zugeführt. Die durch die Mischraumöffnung 23 aus dem H-Luftrnischraum. 20 in die Kaltluftmischkammer 27 strömende Luftmenge kann mittels einer M-Luftklappe 25 als M-Luftsteuerorgan 24 gesteuert und/oder geregelt werden. Die M-Luftklappe 25 ist um eine M-Schwenkachse 26 verschwenkbar. Sämtliche Luftklappen 10, 14, und 25 können mittels nicht dargestellter Stellmotoren bewegt werden. Die Steuerung der Bewegung der Stellmotoren bzw. der Stellung der Luftklappen 10, 14, 25 wird von einer nicht dargestellten der Kraftfahrzeugklimaanlage gesteuert. Die Temperatur der aus dem K-Luftauslass 19 ausströmenden Luft ist geringfügig, z. B. um 2° bis 3°C kleiner als die Temperatur der aus dem H-Luftauslass 21 ausströmenden Luft, Die Kaltluftmischkammer 27 bewirkt eine Vermischung der Luft, so dass die aus dem K-Luftauslass 19 ausströmende Luft keine Strähnigkeit und eine homogene Temperaturverteilung aufweist. Je mehr Luft aus dem H-Luftmischraum 20 in die Kaltluftmischkammer 27 aufgrund der Stellung der M-Luftklappe einströmt und umgekehrt, desto höher ist die Temperatur der aus dem K-Luftauslass 19 ausströmenden Luft, Ferner ist die Temperatur der aus dem H-Luftauslass 21 sowie aus dem H-Luftmisohraum 20 in die Kaltluftmischkammer 27 einströmende Luft um so höher, je mehr Luft durch den Luftkanal 4 mit den beiden Heizeinrichtungen 6 strömt aufgrund der Stellung der H-Luftkappe 10 und je weniger Luft durch den Heizeinrichtungsbypass kanal 22 strömt und umgekehrt.

Insgesamt betrachtet sind mit der erfindungsgemäßen Kraftfahrzeugklimaanlage 1 wesentliche Vorteile verbunden. Die Ausbildung des Kaltluftbypasskanales 12 gestattet eine optimierte Leitung der Luft von dem Verdampfer 3 zu dem K-Luftauslass 19. Ferner wird durch die Kaltluftmischkammer 27 eine homogene Temperaturverteilung der aus dem K-Luftauslass 19 ausströmenden Luft gewährleistet.

### Bezugszeichonliste

- 1: Kraftfahrzeugklimaanlage
- 2: Gehäuse
- 3: Verdampfer
- 4: Luftkanal
- 5: Wandung des Gehäuses
- 6: Heizeinrichtung
- 7: Wärmeübertrager
- 8: Elektrische Heizeinrichtung
- 9: H-Luftsteuerorgan
- 10: H-Luftklappe
- 11: H-Schwenkachse
- 12: Kaltluftbypasskaual
- 13: K-Luftsteuerorgan
- 14: K-Luftklappe
- 15: K-Schwenkachse
- 16: Eintrittsseite des Verdampfers
- 17: Austritsseite des Verdampfers
- 18: Teilfläche der Austrittsseite
- 19: K-Luftauslass
- 20: H-Luftmischraum
- 21: H-Luftaualass
- 22: Heizeinrichtungsbypasskanal
- 23: Mischraumöffnung
- 24: M-Luftsteuerorgan
- 25: M-Luftklappe
- 26: M-Schwenkachse
- 27: Kaltluftmischkammer
- 28: Aufweitungsabschnitt

## Patentansprüche

1. Kraftfahrzeugklimaanlage (1), umfassend
- ein Gehäuse (2),
- einen Verdampfer (3) zum Durchleiten von zu kühlender Luft mit einer Austrittsseite (17) für die Luft, die eine Austrittsfläche aufweist,
- wenigstens eine Heizeinrichtung (6) zum Durchleiten von zu erwärmender Luft,
- ein Heiss-Luftsteuerorgan (9) zum Steuern der durch die Heizeinrichtung (6) leitbaren Luftmenge,
- einen Kaltluftbypasskanal (12), welcher die Luft nach dem Durchleiten durch den Verdampfer (3) an der wenigstens einen Heizeinrichtung (6) vorbei leitet,
- ein Kalt-Luftsteuerorgan (13) zum Steuern der durch den Kaltluftbypasskanal (12) leitbaren Luftmenge, wobei
der Kaltluftbypasskanal (12) an der Austrittsseite (17) des Verdampfers (3) angeschlossen ist und ausschließlich die aus einer Teilfläche (18) der Austrittsfläche des Verdampfers (3) ausströmende Luft in den Kaltluftbypasskanal (12) einleitbar ist und wobei
der Kaltluftbypasskanal (12) unmittelbar an der Austrittsseite (17) des Verdampfers (3) angeschlossen ist und die Querschnittsfläche des Kaltluftbypasskanales (12) unmittelbar an der Austrittsseite (17) kleiner ist als die Austrittsfläche des Verdampfers (3) **dadurch gekennzeichnet, dass** der Kaltluftbypasskanal sich in Strömungsrichtung der Luft in horizontaler Richtung in einem Aufweitungsabschnitt (28) weitet.

2. Kraftfahrzeugklimaanlage nach Anspruch 1, **dadurch gekennzeichnet, dass** die Teilfläche (18) des Verdampfers (3) oder die Querschnittsfläche des Kaltluftbypasskanales (12) unmittelbar an der Austrittsseite (17) weniger als 90 %, 70 % oder 50 %, vorzugsweise weniger als 30 %, 20 %, 10 % oder 5 %, der Austrittsfläche des Verdampfers (3) beträgt.

3. Kraftfahrzeugklimaanlage nach einem oder mehreren der vorhergehenden Ansprüche, **dadurch gekennzeichnet, dass** in einem horizontalen und/oder vertikalen Schnitt am Verdampfer (3) und am Kaltluftbypasskanal (12) unmittelbar an dem Verdampfer (3) nur bei einem Teilbereich des Schnittes der Kaltluftbypasskanal (12) geschnitten ist.

4. Kraftfahrzeugklimaanlage nach Anspruch 3, **dadurch gekennzeichnet, dass** der Teilbereich weniger als 90 %, 70 % oder 50 %, vorzugsweise weniger als 30 %, 20 % 10 % oder 5 %, des gesamten Schnittes beträgt.

5. Kraftfahrzeugklimaanlage nach einem oder mehreren der vorhergehenden Ansprüche, **dadurch gekennzeichnet, dass** der Kaltluftbypasskanal (12) zu einem Kalt-Luftauslass (19) mündet.

6. Kraftfahrzeugklimaanlage nach einem oder mehreren der vorhergehenden Ansprüche, **dadurch gekennzeichnet, dass** die durch die wenigstens eine Heizeinrichtung (6) geleitete Luft in einen Heiss-Luftmischraum (20) strömt und der Heiss-Luftmischraum (20) einen Heiss-Luftauslass (21) aufweist.

7. Kraftfahrzeugklimaanlage nach Anspruch 6, **dadurch gekennzeichnet, dass** durch einen Heizeinrichtungsbypasskanal (22) oder eine Heizeinrichtungsbypassöffnung Luft nach dem Durchleiten durch den Verdampfer (3) an der wenigstens einen Heizeinrichtung (6) vorbei in den Heiss-Luftmischraum (20) einleitbar ist.

8. Kraftfahrzeugklimaanlage nach Anspruch 7, **dadurch gekennzeichnet, dass** die Kraftfahrzeugklimaanlage ein Warm-Luftsteuerorgan zum Steuern der durch den Heizeinrichtungsbypasskanal (22) oder die Heizeinrichtungsbypassöffnung leitbaren Luftmenge aufweist.

9. Kraftfahrzeugklimaanlage nach einem der
Ansprüche, 6-8 **dadurch gekennzeichnet, dass** durch einen Mischraumkanal oder eine Mischraumöffnung (23) Luft aus dem Heiss-Luftmischraum (20) in den Kaltluftbypasskanal (12) oder in eine Kaltluftmischkammer (27) einleitbar ist.

10. Kraftfahrzeugklimaanlage nach Anspruch 9, **dadurch gekennzeichnet, dass** die Kraftfahrzeugklimaanlage ein Misch-Luftsteuerorgan (24) zum Steuern der durch den Mischraumkanal oder die Mischraumöffnung (23) leitbaren Luftmenge aufweist.

11. Kraftfahrzeugklimaanlage nach Anspruch 9 oder 10, **dadurch gekennzeichnet, dass** der Mischraumkanal oder die Mischraumöffnung (23) sowie der Kaltluftbypasskanal (12) in eine Kaltluftmischkammer (27) münden und die Kaltluftmischkammer (27) den Kalt-Luftauslass aufweist.

12. Kraftfahrzeugklimaanlage nach einem oder mehreren der vorhergehenden Ansprüche, **dadurch gekennzeichnet, dass** die Querschnittsfläche des Kaltluftbypasskanal (12) von einem Beginn an dem Verdampfer (3) zu dem Kalt-Luftauslass (19) oder zu der Kaltluftmischkammer (27) zunimmt, vorzugsweise um das wenigstens 0,3-0,5-, 1-, 1,5-, 2- oder 3-fache zunimmt.

13. Kraftfahrzeugklimaanlage nach Anspruch 12, **dadurch gekennzeichnet, dass** die Querschnittsfläche des Kaltluftbypasskanales (12) an der Kaltluftmischkammer (27) oder an dem Kalt-Luftauslasss (19) im Wesentlichen, insbesondere mit einer Abweichung von weniger als 30 % oder 10 %, der Querschnittsfläche der Kaltluftmischkammer (27) oder des Kalt-Luftauslasses (19) entspricht.

14. Kraftfahrzeugklimaanlage nach einem oder mehreren der vorhergehenden Ansprüche, **dadurch gekennzeichnet, dass** das Heiss-Luftsteuerorgan (9) und/oder das Kalt-Luftsteuerorgan (13) und/oder das Warm-Luftsteuerorgan und/oder das Misch-Luftsteuerorgan (24) eine Luftklappe (10, 14, 25) und/oder ein Jalousieverschluss und/oder ein Rollband ist.

## Claims

1. A motor vehicle air-conditioning system (1), comprising
- a housing (2);
- an evaporator (3) for conducting through air to be cooled, having a discharge side (17) for the air with a discharge surface;
- at least one heating device (6) for conducting through air to be heated;
- a hot air control element (9) for controlling the air volume that can be conducted through the heating device (6);
- a cold air bypass channel (12), which conducts the air past the at least one heating device (6) after it has been conducted through the evaporator (3);
- a cold air control element (13) for controlling the air volume that can be conducted through the cold air bypass channel (12), wherein
the cold air bypass channel (12) is connected to the discharge side (17) of the evaporator (3) and only the air flowing out of a sub-surface (18) of the discharge surface of the evaporator (3) can be conducted into the cold air bypass channel (12), and wherein
the cold air bypass channel (12) is directly connected to the discharge side (17) of the evaporator (3), and the cross-sectional surface of the cold air bypass channel (12) directly on the discharge side (17) is smaller than the discharge surface of the evaporator (3), **characterized in that**
the cold air bypass channel widens in the horizontal direction in the flow direction of the air to form a widened section (28).

2. The motor vehicle air-conditioning system according to claim 1, **characterized in that** the sub-surface (18) of the evaporator (3) or the cross-sectional surface of the cold air bypass channel (12) directly on the discharge side (17) is less than 90%, 70% or 50%, and preferably less than 30%, 20%, 10% or 5%, of the discharge surface of the evaporator (3).

3. A motor vehicle air-conditioning system according to one or more of the preceding claims, **characterized in that** the cold air bypass channel (12) is cut in a horizontal and/or vertical section on the evaporator (3) and on the cold air bypass channel (12) directly on the evaporator (3) only in a portion of the section.

4. The motor vehicle air-conditioning system according to claim 3, **characterized in that** the portion amounts to less than 90%, 70% or 50%, and preferably less than 30%, 20%, 10% or 5%, of the entire section.

5. A motor vehicle air-conditioning system according to one or more of the preceding claims, **characterized in that** the cold air bypass channel (12) leads into a cold air outlet (19).

6. A motor vehicle air-conditioning system according to one or more of the preceding claims, **characterized in that** the air conducted through the at least one heating device (6) flows into a hot air mixing chamber (20), and the hot air mixing chamber (20) comprises a hot air outlet (21).

7. The motor vehicle air-conditioning system according to claim 6, **characterized in that** air can be conducted through a heating device bypass channel (22) or a heating device bypass opening after it has been conducted through the evaporator (3), past the at least one heating device (6) into the hot air mixing chamber (20).

8. The motor vehicle air-conditioning system according to claim 7, **characterized in that** the motor vehicle air-conditioning system comprises a warm air control element for controlling the air volume that can be conducted through the heating device bypass channel (22) or the heating device bypass opening.

9. A motor vehicle air-conditioning system according to any one of claims 6 to 8, **characterized in that** air can be conducted through a mixing chamber channel or a mixing chamber opening (23) from the hot air mixing chamber (20) into the cold air bypass channel (12) or into a cold air mixing chamber (27).

10. The motor vehicle air-conditioning system according to claim 9, **characterized in that** the motor vehicle air-conditioning system comprises a mixing air control element (24) for controlling the air volume that can be conducted through the mixing chamber channel or the mixing chamber opening (23).

11. The motor vehicle air-conditioning system according to claim 9 or 10, **characterized in that** the mixing chamber channel or the mixing chamber opening (23) as well as the cold air bypass channel (12) lead into a cold air mixing chamber (27), and the cold air mixing chamber (27) comprises a cold air outlet.

12. A motor vehicle air-conditioning system according to one or more of the preceding claims, **characterized in that** the cross-sectional surface of the cold air bypass channel (12) increases starting at the evaporator (3) toward the cold air outlet (19) or toward the cold air mixing chamber (27), and preferably increases at least 0.3-, 0.5-, 1-, 1.5-, 2- or 3-fold.

13. The motor vehicle air-conditioning system according to claim 12, **characterized in that** the cross-sectional surface of the cold air bypass channel (12) on the cold air mixing chamber (27) or on the cold air outlet (19) substantially corresponds to the cross-sectional surface of the cold air mixing chamber (27) or of the cold air outlet (19), in particular with a deviation of less than 30% or 10%.

14. A motor vehicle air-conditioning system according to one or more of the preceding claims, **characterized in that** the hot air control element (9) and/or the cold air control element (13) and/or the warm air control element and/or the mixing air control element (24) is a damper (10, 14, 25) and/or a louvered shutter and/or a roller belt.

## Revendications

1. Système de climatisation (1) d'un véhicule automobile, comprenant :
- un carter (2),
- un évaporateur (3) servant à faire circuler de l'air à refroidir et comportant un côté de sortie (17) pour l'air, côté de sortie qui présente une surface de sortie,
- au moins un dispositif de chauffage (6) servant à faire circuler de l'air à chauffer,
- un organe de commande d'air chaud (9) servant à commander la quantité d'air pouvant être dirigée à travers le dispositif de chauffage (6),
- un conduit de dérivation d'air froid (12) qui fait circuler l'air, après le passage à travers l'évaporateur (3), devant le dispositif de chauffage (6) au moins au nombre de un,
- un organe de commande d'air froid (13) servant à commander la quantité d'air pouvant être dirigée à travers le conduit de dérivation d'air froid (12),
où le conduit de dérivation d'air froid (12) est raccordé au côté de sortie (17) de l'évaporateur (3), et exclusivement l'air sortant d'une surface partielle (18) de la surface de sortie de l'évaporateur (3) peut être dirigé dans le conduit de dérivation d'air froid (12), et où le conduit de dérivation d'air froid (12) est raccordé directement au côté de sortie (17) de l'évaporateur (3), et la surface de section du conduit de dérivation d'air froid (12) directement raccordé au côté de sortie (17) est plus petite que la surface de sortie de l'évaporateur (3),
**caractérisé en ce que** le conduit de dérivation d'air froid s'élargit dans une partie évasée (28), dans le sens horizontal, suivant la direction d'écoulement de l'air.

2. Système de climatisation d'un véhicule automobile selon la revendication 1, **caractérisé en ce que** la surface partielle (18) de l'évaporateur (3) ou la surface de section du conduit de dérivation d'air froid (12) raccordé directement au côté de sortie (17) est inférieure à 90 %, à 70 % ou à 50 %, de préférence inférieure à 30 %, à 20 %, à 10 % ou à 5 % de la surface de sortie de l'évaporateur (3).

3. Système de climatisation d'un véhicule automobile selon l'une ou plusieurs des revendications précédentes, **caractérisé en ce que** le conduit de dérivation d'air froid (12) est coupé dans une section horizontale et/ou verticale, au niveau de l'évaporateur (3) et du conduit de dérivation d'air froid (12) raccordé directement à l'évaporateur (3), seulement dans le cas d'une zone partielle de la section.

4. Système de climatisation d'un véhicule automobile selon la revendication 3, **caractérisé en ce que** la zone partielle est inférieure à 90 %, à 70 % ou à 50 %, de préférence inférieure à 30 %, à 20 %, à 10 % ou à 5 % de la section totale.

5. Système de climatisation d'un véhicule automobile selon l'une ou plusieurs des revendications précédentes, **caractérisé en ce que** le conduit de dérivation d'air froid (12) débouche sur une sortie d'air froid (19).

6. Système de climatisation d'un véhicule automobile selon l'une ou plusieurs des revendications précédentes, **caractérisé en ce que** l'air dirigé à travers le dispositif de chauffage (6) au moins au nombre de un s'écoule dans un espace de mélange d'air chaud (20), et l'espace de mélange d'air chaud (20) présente une sortie d'air chaud (21).

7. Système de climatisation d'un véhicule automobile selon la revendication 6, **caractérisé en ce que** de l'air, après le passage à travers l'évaporateur (3) en passant devant un dispositif de chauffage (6) au moins au nombre de un situé dans l'espace de mélange d'air chaud (20), peut être introduit à travers un conduit de dérivation (22) du dispositif de chauffage ou bien à travers une ouverture de dérivation du dispositif de chauffage.

8. Système de climatisation d'un véhicule automobile selon la revendication 7, **caractérisé en ce que** le système de climatisation d'un véhicule automobile présente un organe de commande d'air chaud servant à commander la quantité d'air pouvant être dirigée à travers le conduit de dérivation (22) du dispositif de chauffage ou bien à travers l'ouverture de dérivation du dispositif de chauffage.

9. Système de climatisation d'un véhicule automobile selon l'une quelconque des revendications 6 à 8, **caractérisé en ce que** de l'air provenant de l'espace de mélange d'air chaud (20) peut être introduit dans le conduit de dérivation d'air froid (12) ou bien dans une chambre de mélange d'air froid (27), en passant par un conduit de l'espace de mélange ou par une ouverture (23) de l'espace de mélange.

10. Système de climatisation d'un véhicule automobile selon la revendication 9, **caractérisé en ce que** le système de climatisation d'un véhicule automobile présente un organe de commande d'air de mélange (24) servant à commander la quantité d'air pouvant être dirigée à travers le conduit de l'espace de mélange ou à travers l'ouverture (23) de l'espace de mélange.

11. Système de climatisation d'un véhicule automobile selon la revendication 9 ou 10, **caractérisé en ce que** le conduit de l'espace de mélange ou l'ouverture (23) de l'espace de mélange ainsi que le conduit de dérivation d'air froid (12) débouchent dans une chambre de mélange d'air froid (27), et la chambre de mélange d'air froid (27) présente la sortie d'air froid (19).

12. Système de climatisation d'un véhicule automobile selon l'une ou plusieurs des revendications précédentes, **caractérisé en ce que** la surface de section du conduit de dérivation d'air froid (12) augmente depuis un début situé au niveau de l'évaporateur (3), jusqu'à la sortie d'air froid (19) ou jusqu'à la chambre de mélange d'air froid (27), de préférence d'au moins 0,3 fois, de 0,5 fois, de 1 fois, de 1,5 fois, de 2 fois ou de 3 fois.

13. Système de climatisation d'un véhicule automobile selon la revendication 12, **caractérisé en ce que** la surface de section du conduit de dérivation d'air froid (12), au niveau de la chambre de mélange d'air froid (27) ou au niveau de la sortie d'air froid (19), correspond pratiquement, en particulier avec un écart de moins de 30 % ou de 10 %, à la surface de section de la chambre de mélange d'air froid (27) ou de la sortie d'air froid (19).

14. Système de climatisation d'un véhicule automobile selon l'une ou plusieurs des revendications précédentes, **caractérisé en ce que** l'organe de commande d'air chaud (9) et/ou l'organe de commande d'air froid (13) et/ou l'organe de commande d'air de mélange (24) est un volet d'air (10, 14, 25) et/ou une fermeture à jalousie et/ou une bande roulante.
